# EUROPÄISCHE PATENTANMELDUNG

(11) **EP 3 628 610 A1**
(43) Veröffentlichungstag der Anmeldung: **01.04.2020**
(21) Anmeldenummer: 19199631.3
(22) Anmeldetag: 25.09.2019
(51) Int. Cl.: B65G 47/256, B65G 47/14

(54) **VORRICHTUNG ZUM AUSRICHTEN UND VEREINZELN VON ALS SCHÜTTGUT VORLIEGENDEN GEGENSTÄNDEN**

(30) Priorität: 27.09.2018 DE 102018007654
(71) Anmelder: MaHa Korz GmbH, 75045 Walzbachtal Baden-Württemberg (DE)
(72) Erfinder: KORZ, Peter, 75056 Sulzfeld (DE)
(74) Vertreter: Huwer, Andreas

(57) **Zusammenfassung**

Eine Vorrichtung (1) zum Ausrichten und Vereinzeln von als Schüttgut vorliegenden Gegenständen (2) weist einen Stufenförderer (3) zum Fördern der Gegenstände (2) von einem Zuführende (6) zu einem Abgabeende (7) auf. Der Stufenförderer (3) hat mehrere, in gleichen Stufenhöhen (h) ansteigende und in gegenseitigen Abständen (a) angeordnete erste Stufen (14) und mehrere in gleichen Stufenhöhen (h) ansteigende und in gegenseitigen Abständen (a) angeordnete zweite Stufen (15). Zwischen jedem Paar benachbarter erster Stufen (14) ist jeweils eine zweite Stufe (15) angeordnet und umgekehrt. Die zweiten Stufen (14) sind zum Fördern der Gegenstände zwischen einer unteren Aufnahmestellung und einer oberen Aufnahmestellung relativ zu den ersten Stufen (14) auf- und ab bewegbar. Benachbart zum Abgabeende (7) des Stufenförderers (3) ist eine Querfördereinrichtung (8) angeordnet, die eine entlang der Stufen (14, 15) in eine Transportrichtung (10) bewegbare Auflagefläche (12) für die Gegenstände (2) aufweist. Zum Zurückwerfen von nicht lagerichtig auf einer Stufe (14, 15) angeordneten Gegenständen ist am Abgabeende (7) des Stufenförderers (3) eine angeordneten Rückwurfklappe (17) angeordnet, die um eine sich entlang der Stufen (14, 15) erstreckende Schwenkachse (18) verschwenkbar gelagert ist und mit einem Positionierantrieb (19) in Antriebsverbindung steht. Die Schwenkachse (18) ist mittels einer Verstelleinrichtung (22) quer zu Längserstreckung der Schwenkachse (18) relativ zu den ersten Stufen (14) verstellbar und in unterschiedlichen, quer zu Längserstreckung der Schwenkachse (18) zueinander versetzten Lagen relativ zu den Stufen (14, 15) positionierbar.

## Beschreibung

Die Erfindung betrifft eine Vorrichtung zum Ausrichten und Vereinzeln von als Schüttgut vorliegenden Gegenständen, mit einem Stufenförderer zum Fördern der Gegenstände von einem Zuführende zu einem Abgabeende des Stufenförderers, wobei der Stufenförderer mehrere, in gleichen Stufenhöhen ansteigende und in gegenseitigen Abständen angeordnete erste Stufen und mehrere in gleichen Stufenhöhen ansteigende und in gegenseitigen Abständen angeordnete zweite Stufen aufweist, wobei zwischen jedem Paar benachbarter erster Stufen jeweils eine zweite Stufe angeordnet ist und umgekehrt, und wobei die zweiten Stufen zum Fördern der Gegenstände vom Zuführende zum Abgabeende mittels eines ersten Positionierantriebs zwischen einer unteren Aufnahmestellung und einer oberen Aufnahmestellung relativ zu den ersten Stufen auf- und ab bewegbar sind, mit einer Querfördereinrichtung, die eine entlang der Stufen in eine Transportrichtung bewegbare Auflagefläche für die Gegenstände aufweist, welche derart benachbart zum Abgabeende des Stufenförderers angeordnet ist, dass die vom Stufenförderer abgegebenen Gegenstände auf der Auflagefläche positionierbar sind, mit einer am Abgabeende des Stufenförderers angeordneten Rückwurfklappe, die um eine sich entlang der Stufen erstreckende Schwenkachse verschwenkbar gelagert ist und zum Zurückwerfen von nicht lagerichtig auf einer Stufe angeordneten Gegenständen mit einem zweiten Positionierantrieb in Antriebsverbindung steht.

Eine derartige Vorrichtung ist aus der Praxis bekannt und wird von der Anmelderin mit großem Erfolg produziert und vermarktet. Die Vorrichtung kann dazu verwendet werden, beispielsweise scheiben- oder quaderförmige Werkstücke, die als Schüttgut vorliegen, in einer vorbestimmten Lage auszurichten und auf der Auflagefläche einer als Förderband ausgestalteten Querfördereinrichtung zu positionieren.

Die Vorrichtung hat eine Maschinenbasis, an der ein Aufnahmebehälter angeordnet ist, in den die Gegenstände als Schüttgut eingefüllt werden. Dabei sind die einzelnen Gegenstände in zufälligen Lagen in dem Aufnahmebehälter angeordnet und ausgerichtet. An der Maschinenbasis ist ein Stufenförderer vorgesehen, der mit seinem Zuführende in den Aufnahmebehälter eingreift und mit seinem Abgabeende der Auflagefläche der Querfördereinrichtung zugewandt ist. Der Stufenförderer hat mehrere erste Stufen, die jeweils in einer vorbestimmten Höhe in Bezug zu der Maschinenbasis angeordnet sind und in gleichen Stufenhöhen ansteigen. Außerdem hat der Stufenförderer mehrere zweite Stufen, die synchron zueinander reversierend auf- und ab bewegbar sind. Zwischen jedem Paar zueinander benachbarter erster Stufen ist jeweils ein erster Zwischenraum vorgesehen, in dem eine zweite Stufe angeordnet ist. In entsprechender Weise ist zwischen jedem Paar zueinander benachbarter zweiter Stufen jeweils ein zweiter Zwischenraum vorgesehen, in dem eine erste Stufe angeordnet ist. Zumindest die unterste zweite Stufe ist in ihrer unteren Aufnahmestellung in dem Aufnahmebehälter angeordnet.

Die ersten und zweiten Stufen haben jeweils eine schräge Oberfläche für die Aufnahme der Gegenstände. In einer normal zur Längserstreckung der Stufen angeordneten Ebene fällt die schräge Oberfläche, ausgehend von dem von der Querfördereinrichtung entfernten Ende der Auflagefläche zu dem der Querfördereinrichtung zugewandten Ende der Auflagefläche hin, ab.

Während des Betriebs der Vorrichtung werden die zweiten Stufen reversierend auf und ab bewegt. In der unteren Aufnahmestellung und/oder zwischen dieser und der oberen Aufnahmestellung gelangen die in dem Aufnahmebehälter befindlichen Gegenstände auf die Oberfläche der untersten zweite Stufe.

Danach werden die zweiten Stufe aufwärts bewegt, um Gegenstände, die auf der Oberfläche der untersten zweiten Stufe liegen, nach oben zu befördern. Sobald die Oberfläche der untersten zweite Stufe das Niveau der Oberfläche der untersten ersten Stufe erreicht hat, können die Gegenstände von der Oberfläche der untersten zweiten Stufe auf die Oberfläche der untersten ersten Stufe gelangen. Dies wird durch die Schwerkraft und die schräge Anordnung der Stufen-Oberflächen ermöglicht.

Sobald die zweiten Stufen die obere Aufnahmestellung erreicht haben, werden die zweiten Stufen abwärts bewegt, bis sie ihre untere Aufnahmestellung erreichen. Während der Abwärtsbewegung bleiben die Gegenstände auf der Oberfläche der untersten ersten Stufe liegen. Nachdem die Oberfläche der zweituntersten zweiten Stufe das Niveau der Oberfläche der untersten ersten Stufe erreicht hat, gelangen die die Gegenstände von der Oberfläche der untersten ersten Stufe auf die Oberfläche der zweituntersten zweiten Stufe. Gleichzeitig kann die unterste zweite Stufe mit in dem Behälter befindlichen weiteren Gegenständen beladen werden. Beides wird durch die Schwerkraft und die schräge Anordnung der Oberflächen der Stufen unterstützt.

In entsprechender Weise werden weitere Reversierschritte durchgeführt. Bei jedem Reversierschritt werden Gegenstände, die auf der Oberfläche einer Stufe liegen, an die Oberfläche der nächst höheren Stufe übergeben. Gegenstände, die in einer vorbestimmten Lage auf die Oberfläche der obersten zweiten Stufe gelangen, werden auf der Auflagefläche der Querfördereinrichtung abgelegt und mit dieser in Transportrichtung der Querfördereinrichtung weiterbewegt bzw. abtransportiert.

Um zu verhindern, dass Gegenstände, die in einer unerwünschten, von der vorbestimmten Lage abweichenden Fehlposition auf die oberste zweite Stufe gelangen, an die Querfördereinrichtung übergeben werden, ist am Abgabeende des Stufenförderers eine Rückwurfklappe angeordnet, die um eine sich entlang der Stufen erstreckende Schwenkachse verschwenkbar gelagert ist. Die Rückwurfklappe steht mit einem zweiten Positionierantrieb in Antriebsverbindung, mittels dem sie zum Zurückwerfen von nicht lagerichtig auf der obersten zweiten Stufe angeordneten Gegenständen in eine Rückwurfposition gebracht werden kann. Wenn die Rückwurfklappe in der Rückwurfposition gebracht wird, während die oberste zweite Stufe in ihrer oberen Aufnahmestellung angeordnet ist, werden Gegenstände, die in einer unerwünschten Lage auf der obersten zweiten Stufe liegen, in den Aufnahmebehälter und/oder auf eine unterhalb der obersten zweiten Stufe befindliche Stufe zurückgeworfen. Wenn die Gegenstände beispielsweise scheibenförmig ausgestaltet sind und liegend an die Querfördereinrichtung übergeben werden sollen, kann die Rückwurfklappe in der Rückwurfposition so positioniert sein, dass Gegenstände, die stehend auf der obersten zweiten Stufe angeordnet sind, mit der Rückwurfklappe kollidieren, während Gegenstände die liegend auf der obersten zweiten Stufe angeordnet sind, durch einen zwischen der Rückwurfklappe und der Auflagefläche der Querfördereinrichtung befindlichen Schlitz hindurch von der obersten zweiten Stufe auf die Auflagefläche gelangen können.

Obwohl sich die vorbekannte Vorrichtung in der Praxis in einer Vielzahl von Anwendungen bewährt hat, hat es sich herausgestellt, dass die Vorrichtung zum Ausrichten und Vereinzeln von scheibenförmige Gegenstände mit vergleichsweise großen Durchmessern bzw. Abmessungen nur bedingt geeignet ist.

Es besteht deshalb die Aufgabe, eine Vorrichtung der eingangs genannten Art zu schaffen, mit der Gegenstände mit unterschiedlichen Abmessungen vereinzelt und zuverlässig in einer vorbestimmten Lage auf der Querfördereinrichtung positioniert werden können.

Erfindungsgemäß wird diese Aufgabe mit den Merkmalen des Patentanspruchs 1 gelöst. Diese sehen bei einer Vorrichtung der eingangs genannten Art vor, dass die Schwenkachse mittels einer Verstelleinrichtung quer zu Längserstreckung der Schwenkachse relativ zu den ersten und zweiten Stufen verstellbar und mittels eines dritten Positionierantriebs in unterschiedlichen, quer zu Längserstreckung der Schwenkachse zueinander versetzten Lagen relativ zu den ersten und zweiten Stufen positionierbar ist.

In vorteilhafter Weise ist es dadurch möglich, die Schwenkachse zum Ausrichten von Gegenständen mit kleinen Abmessungen benachbart zum Abgabeende des Stufenförderers anzuordnen und zum Ausrichten von Gegenständen mit größeren Abmessungen die Schwenkachse weiter vom Abgabeende des Stufenförderers entfernt anzuordnen. Dadurch kann die Vorrichtung für ein breiteres Spektrum von Gegenständen mit unterschiedlichen Abmessungen verwendet werden.

Die Rückwurfklappe kann auch in eine Anschlagposition gebracht werden, in der sie einen Anschlag für die Gegenstände bildet, welcher verhindert, dass die Gegenstände, bei der Übergabe an die Querfördereinrichtung über den dem Stufenförderer abgewandten Längsrand der Auflagefläche der Querfördereinrichtung hinweg von dieser herunterfallen.

Wenn die auf der Auflagefläche der Querfördereinrichtung in einer Vorzugslage abzulegenden Gegenstände kompakte Abmessungen aufweisen, wird die Schwenkachse mittels des dritten Positionierantriebs sowohl in der Abwurfposition als auch in der Anschlagposition relativ nahe am Abgabeende des Stufenförderers positioniert. Dabei kann die Schwenkachse in der Anschlagposition an derselben Stelle angeordnet sein wie in der Abwurfposition. Die Schwenkposition der Rückwurfklappe ist in der Abwurfposition und der Anschlagposition unterschiedlich.

Wenn die als Schüttgut vorliegenden Gegenstände größere Abmessungen haben, wie zum Beispiel Stangen oder Scheiben mit großem Durchmesser, kann die Schwenkachse mittels des dritten Positionierantriebs in der Anschlagposition weiter vom Abgabeende des Stufenförderers weg positioniert werden als in der Abwurfposition. Hierbei ist die Schwenkachse der Rückwurfklappe während der Aufwärtsbewegung der zweiten Stufen relativ nahe am Abgabeende des Stufenförderers positioniert. Wenn die oberste zweite Stufe auf ein Niveau angehoben wurde, bei dem Gegenstände, die in einer unerwünschten Lage auf der obersten zweiten Stufe liegen, durch Verschwenken der Rückwurfklappe um die Schwenkachse von der obersten zweite Stufe abgeworfen werden können, wird die Rückwurfklappe in den über der obersten zweite Stufe befindlichen Raum verschwenkt, um diese Gegenstände von der obersten zweiten Stufe zu entfernen und zum Zuführende des Stufenförderers zurückzuwerfen. Danach wird die Schwenkachse mittels des dritten Positionierantriebs von dem Abgabeende des Stufenförderers wegbewegt und die Rückwurfklappe wird in eine Vertikalebene verschwenkt. In dieser Position dient die Rückwurfklappe als Anschlag, der verhindert, dass Gegenstände, die in einer vorbestimmten Ausrichtung von der obersten zweiten Stufe auf die Auflagefläche der Querfördereinrichtung transferiert werden, nicht an der dem Stufenförderer abgewandten Seite von der Auflagefläche herunterfallen können.

Bei einer bevorzugten Ausgestaltung der Erfindung weist die Verstelleinrichtung mindestens eine Linearführung auf, mittels welcher die Schwenkachse parallel zur Auflagefläche der Querfördereinrichtung und quer zu deren Transportrichtung relativ zur Auflagefläche verschiebbar ist. Mithilfe der Linearführung kann die Schwenkachse in konstantem Abstand zur Auflagefläche auf das Abgabeende des Stufenförderers zu und von diesem wegbewegt werden. Die Linearführung erstreckt sich die vorzugsweise in horizontale Richtung.

Bei einer vorteilhaften Ausführungsform der Erfindung ist der mindestens einen Linearführung eine Zahnstange zugeordnet, die sich entlang der Linearführung erstreckt und mit einem Zahnrad kämmt, das mit einem dritten Positionierantrieb in Antriebsverbindung steht. Dies ermöglicht einen einfachen Aufbau der Verstelleinrichtung.

Vorteilhaft ist, wenn an beiden Axialenden der Rückwurfklappe jeweils eine Linearführung vorgesehen ist, an der eine Zahnstange angeordnet ist, die mit einem ihr zugeordneten Zahnrad kämmt, und wenn die Zahnräder durch eine parallel zur Schwenkachse angeordnete Welle miteinander verbunden sind. Dabei werden beide Zahnstangen über die Welle synchron angetrieben.

Bei einer bevorzugten Ausgestaltung der Erfindung ist die Schwenkachse an einem ortsfest zu der Zahnstange angeordneten Lagerteil verschwenkbar gelagert. Somit werden die Zahnstangen beim Betätigen des dritten Positionierantriebs zusammen mit der Rückwurfklappe relativ zum Stufenförderer verschoben.

Bei einer vorteilhaften Ausführungsform der Erfindung ist die horizontale Tiefe, welche die oberste zweite Stufe in einer normal zur Transportrichtung der Querfördereinrichtung angeordneten Ebene aufweist, mittels einer Tiefeneinstelleinrichtung einstellbar, wobei die Tiefeneinstelleinrichtung zum Verstellen der Tiefe einen vierten Positionierantrieb aufweist. Hierdurch kann die Vorrichtung noch besser an die Abmessungen der auszurichtenden und zu vereinzelnden Gegenstände angepasst werden. So kann beispielsweisen bei scheibenförmigen Gegenständen, die eine geringe Scheibendicke aufweisen, die Tiefe der obersten zweite Stufe kleiner eingestellt werden als bei scheibenförmigen Gegenständen mit größerer Scheibendicke.

Bevorzugt ist die oberste erste Stufe mittels der Tiefeneinstelleinrichtung quer zur Fördereinrichtung der Querfördereinrichtung in horizontale Richtung auf die oberste zweite Stufe zu- und von dieser wegbewegbar. Hierdurch kann die Tiefe der obersten zweite Stufe auf einfache Weise an die Abmessungen der zu fördernden Gegenstände angepasst werden.

Vorteilhaft ist, wenn die ersten und/oder zweiten Stufen eine schräge Oberfläche zur Aufnahme der Gegenstände aufweisen, die in einer normal zur Transportrichtung des Querförderers angeordneten Ebene zu der Querfördereinrichtung hin abfällt. Hierdurch können die auf den zweiten Stufen befindlichen Gegenstände in der oberen Aufnahmestellung der zweiten Stufen leichter von diesen an die dazu jeweils benachbarte erste Stufe abgegeben werden.

Bei einer bevorzugten Ausführungsform der Erfindung ist die Schwenkachse oberhalb der Auflagefläche der Querfördereinrichtung oder oberhalb der geraderen Verlängerung dieser Auflagefläche angeordnet. Dies ermöglicht einen einfachen Aufbau der Vorrichtung.

Bei einer zweckmäßigen Ausgestaltung der Erfindung weist die Rückwurfklappe einen ersten und einen zweiten Flügel auf, die diametral zur Schwenkachse angeordnet sind. Dabei kann sich der Querschnitt der Flügel in einer normal zur Schwenkachse angeordneten Ebene ausgehend von der Schwenkachse zu dem von der Schwenkachse entfernten Ende des Flügels verjüngen.

Nachfolgend sind Ausführungsbeispiele der Erfindung anhand der Zeichnung näher erläutert. Es zeigt:
- Fig. 1: eine perspektivische Ansicht einer Vorrichtung zum Ausrichten und Vereinzeln von als Schüttgut vorliegenden Gegenständen,
- Fig. 2: eine Aufsicht auf die Oberseite der in Fig. 1 gezeigten Vorrichtung,
- Fig. 3: eine Vorderansicht der Vorrichtung gemäß Fig. 1,
- Fig. 4: einen Querschnitt durch die Vorrichtung entlang der in Fig. 3 mit IV bezeichneten Ebene, wobei eine Rückwurfklappe in zwei unterschiedlichen Positionen dargestellt ist, von denen eine strichliniert markiert ist,
- Fig. 5: eine Vorderansicht einer Rückwurfklappe,
- Fig. 6: einen Querschnitt durch die Rückwurfklappe entlang der in Fig. 5 mit VI bezeichneten Ebene,
- Fig. 7: eine Aufsicht auf die Rückwurfklappe,

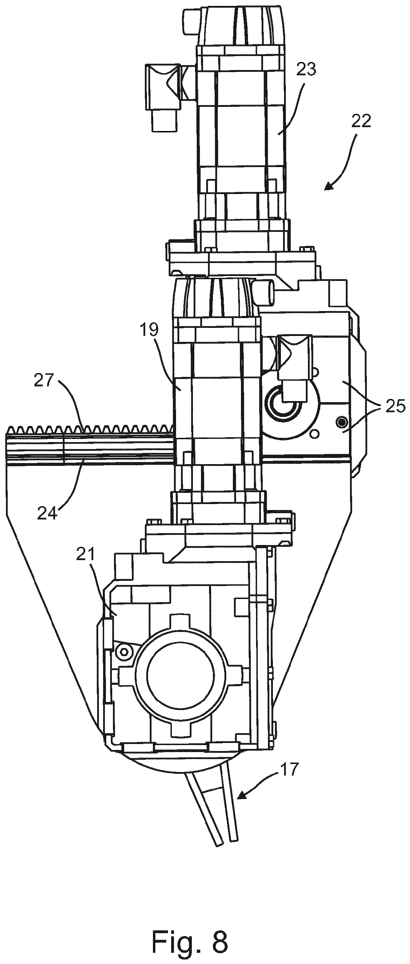

- Fig. 8: eine Seitenansicht der Rückwurfklappe und einer Positioniereinrichtung für die Rückwurfklappe,
- Fig. 9: eine Teilansicht der Vorrichtung, bei der die Rückwurfklappe in einer Rückwurfposition angeordnet ist, und
- Fig. 10: eine Ansicht ähnlich Fig. 9, wobei jedoch die Rückwurfklappe in einer Anschlagposition angeordnet ist.

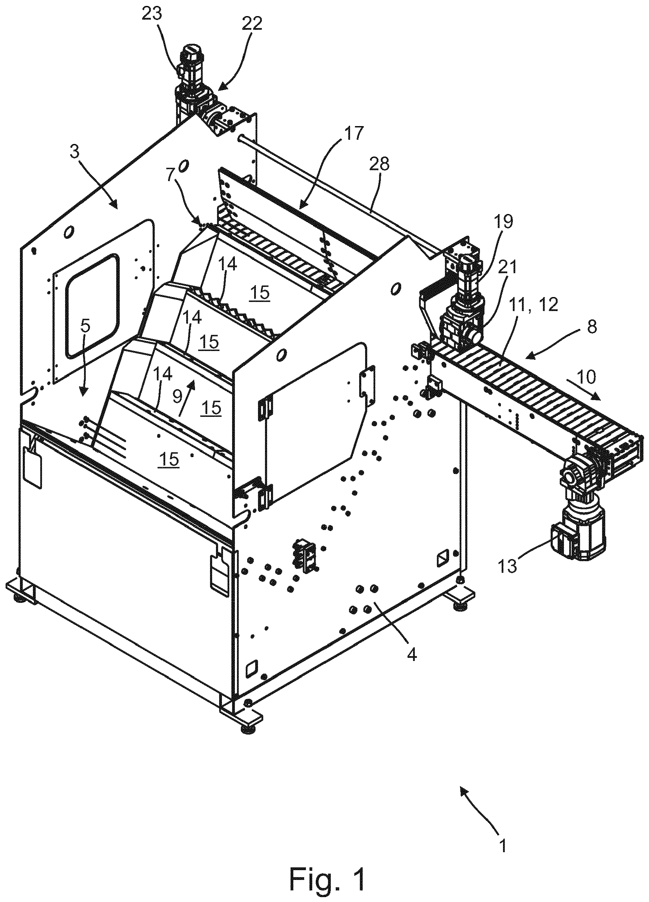

Eine in Fig. 1 im Ganzen mit 1 bezeichnete Vorrichtung zum Ausrichten und Vereinzeln von als Schüttgut vorliegenden Gegenständen 2, wie zum Beispiel scheibenförmigen Gegenständen, hat einen Stufenförderer 3, der an einer Maschinenbasis 4 angeordnet ist. Der Stufenförderer 3 hat ein in einem Aufnahmebehälter 5 für die Gegenstände 2 angeordnetes Zuführende 6 und ein Abgabeende 7, das an einer Querfördereinrichtung 8 angeordnet ist. Mit Hilfe des Stufenförderers 3 können die Gegenstände 2 von dem Aufnahmebehälter 5 zu der Querfördereinrichtung 8 in eine erste Transportrichtung 9 transportiert werden. Mit Hilfe der Querfördereinrichtung 8 können die Gegenstände 2 in eine zweite Transportrichtung 10 weitertransportiert werden, die quer zu der ersten Transportrichtung 9 verläuft.

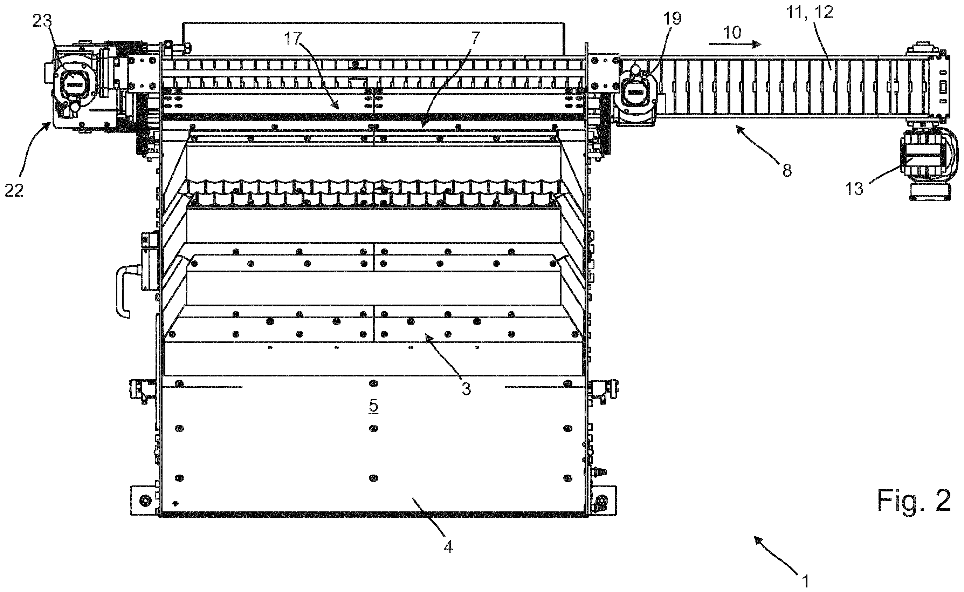

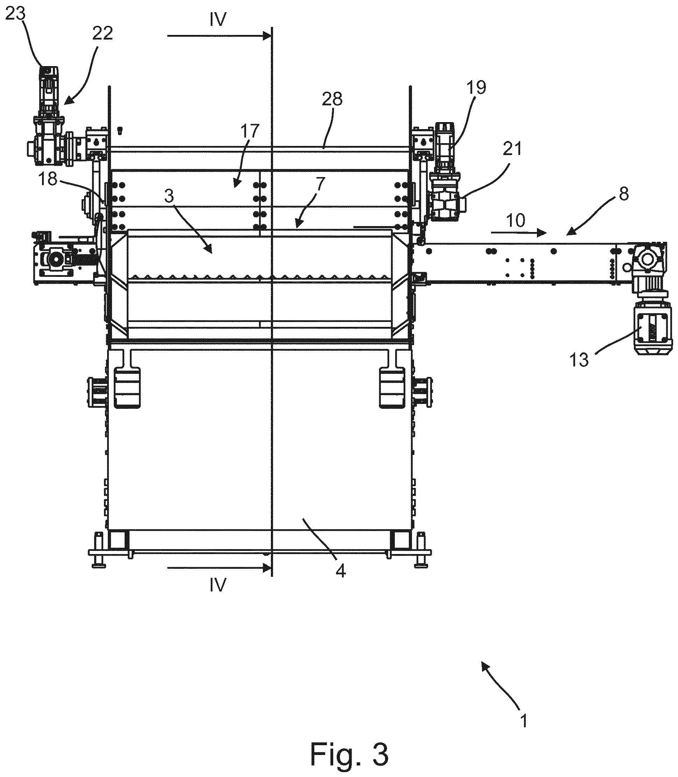

Die Querfördereinrichtung 8 weist ein über Umlenkelemente umlaufendes Förderband 11 auf, das an seiner Oberseite eine Auflagefläche 12 für die Gegenstände 2 hat (Fig. 2). Zum Antreiben des Förderbands 11 hat die Querfördereinrichtung 8 einen Antriebsmotor 13 (Fig. 1 bis 3).

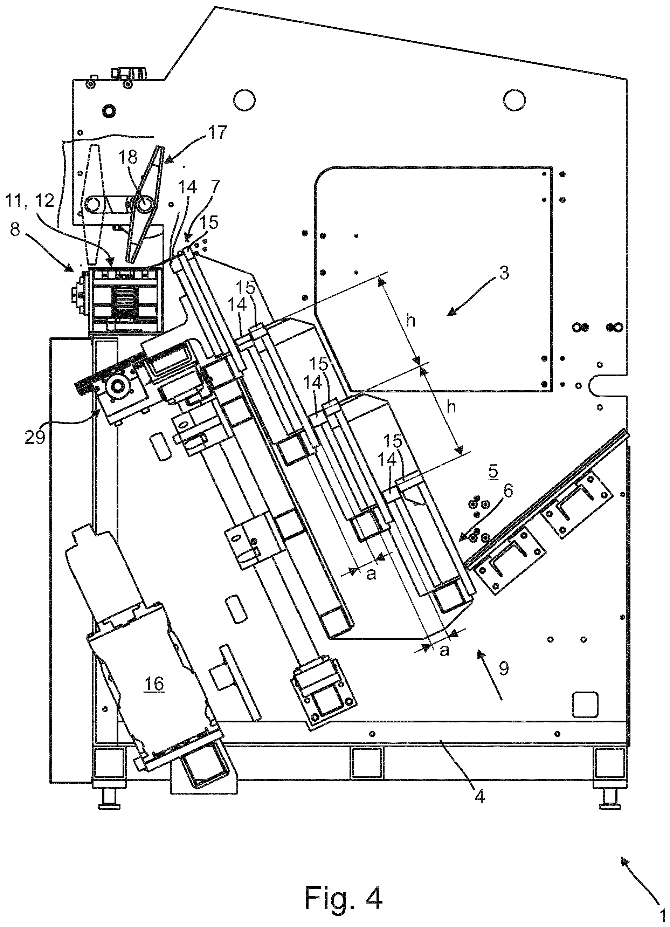

Wie in Fig. 4 zu sehen ist, hat der Stufenförderer 3 mehrere, in gleichen Stufenhöhen h ansteigende und in gegenseitigen Abständen a angeordnete erste Stufen 14.

Zwischen jedem Paar benachbarter erster Stufen 14 ist jeweils eine zweite Stufe 15 und zwischen jedem Paar benachbarter zweiter Stufen 15 ist jeweils eine erste Stufe 14 angeordnet. Die zweiten Stufen 15 steigen in den gleichen Stufenhöhen h an wie die ersten Stufen 14.

Die zweiten Stufen 15 sind in parallel zueinander verlaufenden Ebenen relativ zur Maschinenbasis 4 zwischen einer unteren Aufnahmestellung und einer oberen Aufnahmestellung (Fig. 4) verschiebbar und mittels eines ersten Positionierantriebs 16 auf- und ab bewegbar. Der Steigungswinkel dieser Ebenen beträgt etwa 65°.

Die ersten Stufen 14 sind in der Richtung, in der die zweiten Stufen 15 verschiebbar sind, fest mit der Maschinenbasis 4 verbunden. Auf den zweiten Stufen 15 können die Gegenstände 2 vom Zuführende 6 zum Abgabeende 7 transportiert werden. Bei der Aufwärtsbewegung der zweiten Stufen 15 werden die auf diesen liegenden Gegenstände 2 jeweils auf das Niveau der nächst höheren ersten Stufe 14 angehoben, sofern sie nicht in den Aufnahmebehälter 5 zurückgeworfen werden. In der oberen Aufnahmestellung der zweiten Stufen 15 gelangen die Gegenstände 2 von der betreffenden zweiten Stufe 15, auf der sie sich befinden, auf die dazu benachbarte erste Stufe 14, die näher an der Querfördereinrichtung 8 angeordnet ist als die betreffende zweite Stufe 15.

Um die Übergabe der Gegenstände 2 von den zweiten Stufen 15 an die ersten Stufen 14 zu unterstützen, haben die ersten Stufen 14 und die zweiten Stufen 15 jeweils eine schräge Oberfläche 26, die in einer normal zur Längserstreckung der Stufen 14, 15 angeordneten, der Zeichenebene von Fig. 4 entsprechenden Ebene zu der Querfördereinrichtung 8 hin abfällt.

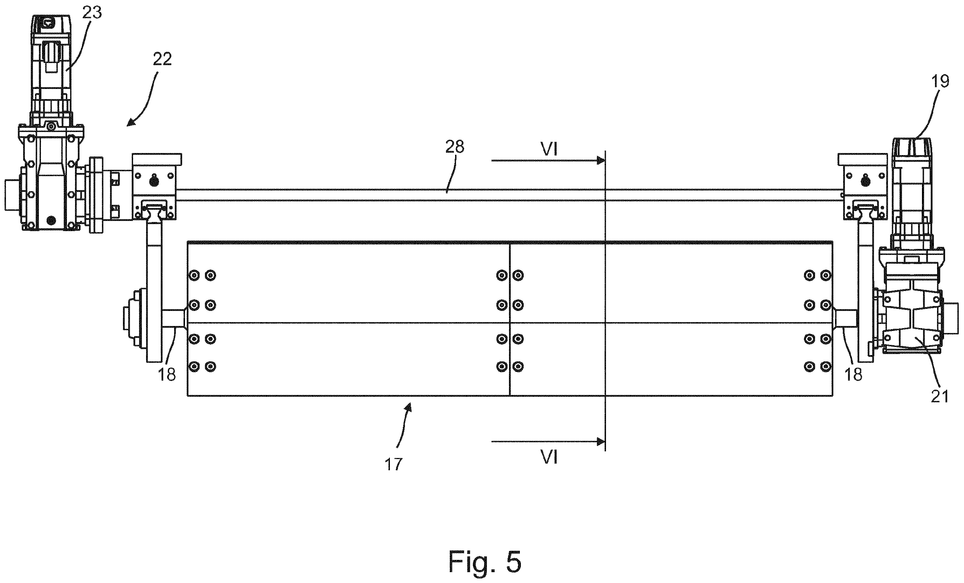

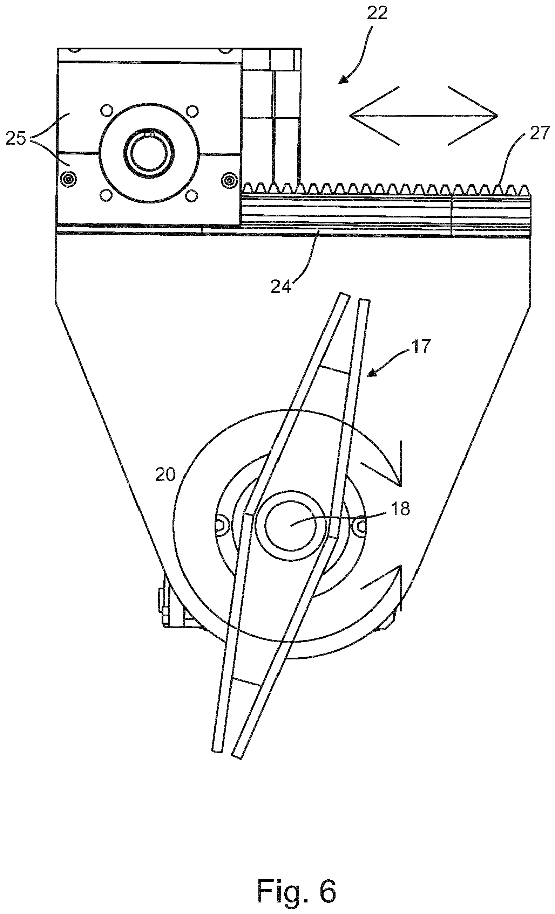

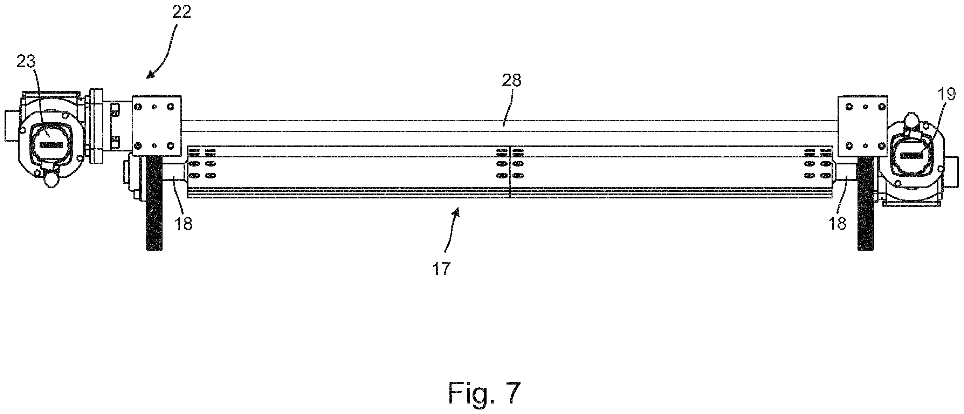

Am Abgabeende des Stufenförderers 3 ist eine Rückwurfklappe 17 parallel zur Längserstreckung der ersten und zweiten Stufen 14, 15 angeordnet. Die Rückwurfklappe 17 ist um eine parallel zur Längserstreckung der ersten und zweiten Stufen 14, 15 angeordnete Schwenkachse 18 (Fig. 5 bis 7) verschwenkbar bzw. drehbar gelagert. Die Schwenkachse 18 verläuft oberhalb der Auflagefläche 12 und ist parallel zu dieser beabstandet. Die Rückwurfklappe 17 ist mittels eines zweiten Positionierantriebs 19 in Richtung des Doppelpfeils 20 (Fig. 6) unterschiedlichen Schwenkpositionen positionierbar. Der zweite Positionierantrieb 19 steht über ein Winkelgetriebe 21 mit der Rückwurfklappe 17 in Antriebsverbindung.

Die Schwenkachse 18 ist mittels einer Verstelleinrichtung 22 quer zu Längserstreckung der Schwenkachse 18 relativ zu den ersten Stufen parallel zur Auflagefläche 12 des Förderbands 11 verstellbar und mittels eines dritten Positionierantriebs 24 in unterschiedlichen, quer zu Längserstreckung der Schwenkachse 18 zueinander versetzten Lagen relativ zu den ersten und zweiten Stufen 14, 15 positionierbar.

Die die Verstelleinrichtung hat zwei Linearführungen 24, mittels welcher die Schwenkachse 18 parallel zur Auflagefläche 12 der Querfördereinrichtung 8 und rechtwinklig zu deren Transportrichtung 10 relativ zur Maschinenbasis 4 verschiebbar ist. Die Linearführungen 24 sind parallel Auflagefläche 12 und parallel zueinander angeordnet. Wie in Fig. 6 zu sehen ist, sind die Linearführungen 24 jeweils an einem ihnen zugeordneten Lagerteil 25 verschiebbar gelagert. Dieses ist fest mit der Maschinenbasis 4 verbunden.

Den Linearführungen 24 ist jeweils eine Zahnstange 27 zugeordnet, die mit einem an dem Lagerteil 25 drehbar gelagerten Zahnrad kämmt. Die Zahnräder sind drehfest mit einer Welle 28 verbunden, die mittels eines dritten Positionierantriebs 26 drehpositionierbar ist. Wenn die Linearführungen 24 mit Hilfe des Positionierantriebs 26 verstellt werden, verschiebt sich die Schwenkachse 18 zusammen mit dem zweiten 19 Positionierantrieb relativ zur Maschinenbasis 4.

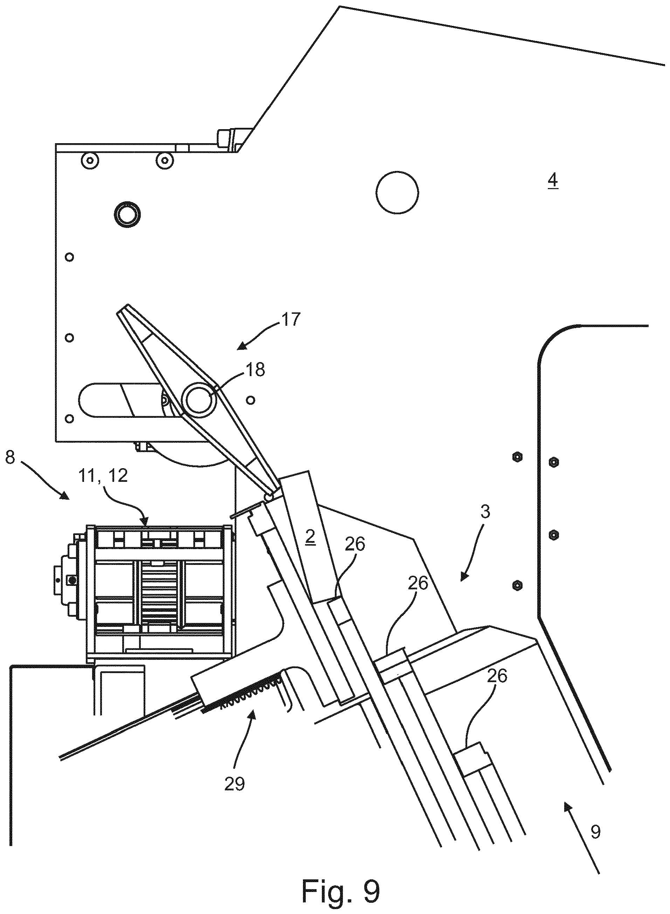

Wie in Fig. 9 zu sehen ist, können mit Hilfe der Rückwurfklappe 17 Gegenstände 2, die nicht in einer Vorzugslage auf der obersten zweiten Stufe 15 angeordnet sind, von der obersten zweiten Stufe 15 abgeworfen werden. Hierzu wird die Schwenkachse nahe am Abgabeende 7 des Stufenförderers 3 positioniert. Sobald die zweiten Stufen bei ihrer Aufwärtsbewegung ein vorbestimmtes Niveau erreichen, wird die Rückwurfklappe 17 in eine Rückwurfstellung gebracht, in welcher die Rückwurfklappe 17 derart in den über der obersten zweiten Stufe 15 befindlichen Raum eindringt, das Gegenstände 2, die nicht in einer Vorzugsposition angeordnet sind, mit der Rückwurfklappe 17 kollidieren und in Richtung auf den Aufnahmebehälter 5 zu von der obersten zweiten Stufe 15 abgeworfen werden.

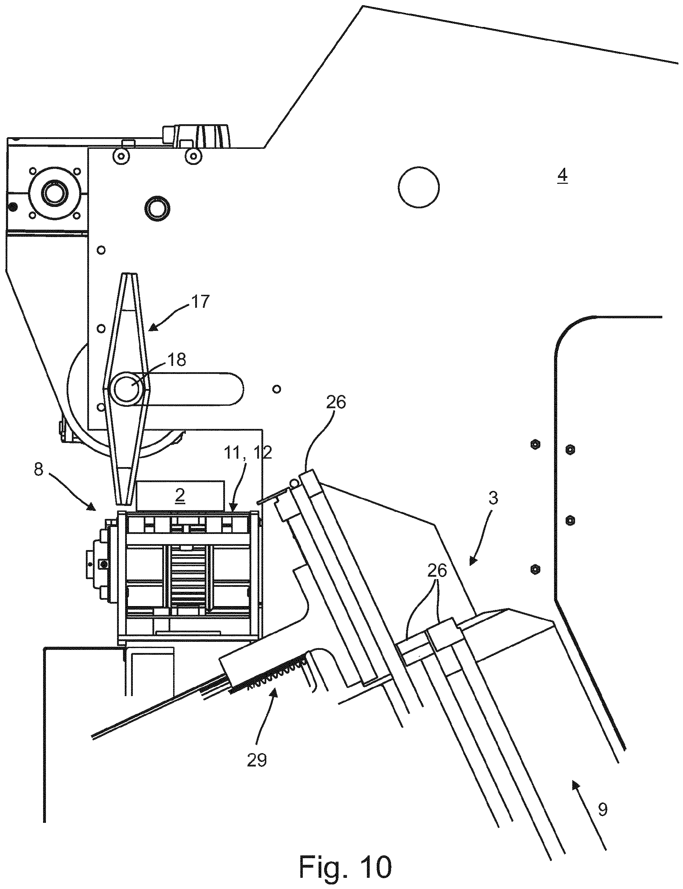

Nachdem die Rückwurfklappe 17 in der Rückwurfstellung positioniert wurde, wird die Schwenkachse mittels des dritten Positionierantriebs 23 zur Querfördereinrichtung 8 verschoben und in eine Anschlagstellung gebracht. Wie in Fig. 10 erkennbar ist, ist die von der Rückwurfklappe 17 aufgespannte Ebene in der Anschlagstellung im Wesentlichen vertikal ausgerichtet (Fig. 10). Die Rückwurfklappe 17 wird hierzu mit Hilfe des zweiten Positionierantriebs 19 entsprechend ausgerichtet.

Die Positionierantriebe 16, 19, 26 sind mit einer in der Zeichnung nicht näher dargestellten Steuereinrichtung verbunden, welche die Positionierantriebe 16, 19, 26 wie vorstehend beschrieben ansteuert.

Das Abgabeende 7 des Stufenförderers ist oberhalb des Niveaus der Auflagefläche 11 des Förderbands 11 angeordnet und derart zu dem Förderband 11 benachbart, dass Gegenstände 2, die auf die oberste erste Stufe gelangen und nicht von der Rückwurfklappe 17 zurückgeworfen wurden, auf das Förderband 11 fallen. Dabei verhindert die in der Anschlagstellung befindliche Rückwurfklappe 17, dass die Gegenstände 2 an der dem Stufenförderer 3 abgewandten Rand des Förderbands 11 von diesem herunterfallen.

Erwähnt werden soll noch, dass die oberste erste Stufe 14 mittels einer Tiefeneinstelleinrichtung 29 rechtwinklig zur Transportrichtung 10 der Querfördereinrichtung 8 und rechtwinklig zu der Richtung, in die die zweiten Stufen auf und ab verschiebbar sind, verstellbar ist. Hierdurch kann die Tiefe der obersten zweiten Stufe 15 eingestellt werden. Die Tiefeneinstelleinrichtung 29 weist einen vierten Positionierantrieb auf.

## Patentansprüche

1. Vorrichtung (1) zum Ausrichten und Vereinzeln von als Schüttgut vorliegenden Gegenständen (2), mit einem Stufenförderer (3) zum Fördern der Gegenstände (2) von einem Zuführende (6) zu einem Abgabeende (7) des Stufenförderers (3), wobei der Stufenförderer (3) mehrere, in gleichen Stufenhöhen (h) ansteigende und in gegenseitigen Abständen (a) angeordnete erste Stufen (14) und mehrere in gleichen Stufenhöhen (h) ansteigende und in gegenseitigen Abständen (a) angeordnete zweite Stufen (15) aufweist, wobei zwischen jedem Paar benachbarter erster Stufen (14) jeweils eine zweite Stufe (15) angeordnet ist und umgekehrt, und wobei die zweiten Stufen (14) zum Fördern der Gegenstände vom Zuführende (6) zum Abgabeende (7) mittels eines ersten Positionierantriebs (16) zwischen einer unteren Aufnahmestellung und einer oberen Aufnahmestellung relativ zu den ersten Stufen (14) auf- und ab bewegbar sind, mit einer Querfördereinrichtung (8), die eine entlang der Stufen (14, 15) in eine Transportrichtung (10) bewegbare Auflagefläche (12) für die Gegenstände (2) aufweist, welche derart benachbart zum Abgabeende (7) des Stufenförderers (3) angeordnet ist, dass die vom Stufenförderer (3) abgegebenen Gegenstände (2) auf der Auflagefläche (12) positionierbar sind, mit einer am Abgabeende (7) des Stufenförderers (3) angeordneten Rückwurfklappe (17), die um eine sich entlang der Stufen (14, 15) erstreckende Schwenkachse (18) verschwenkbar gelagert ist und zum Zurückwerfen von nicht lagerichtig auf einer Stufe (14, 15) angeordneten Gegenständen mit einem zweiten Positionierantrieb (19) in Antriebsverbindung steht, **dadurch gekennzeichnet, dass** die Schwenkachse (18) mittels einer Verstelleinrichtung (22) quer zu Längserstreckung der Schwenkachse (18) relativ zu den ersten und zweiten Stufen (14,15) verstellbar und mittels eines dritten Positionierantriebs (23) in unterschiedlichen, quer zu Längserstreckung der Schwenkachse (18) zueinander versetzten Lagen relativ zu den ersten und zweiten Stufen (14, 15) positionierbar ist.

2. Vorrichtung (1) nach Anspruch 1, **dadurch gekennzeichnet, dass** die Verstelleinrichtung mindestens eine Linearführung (24) aufweist, mittels welcher die Schwenkachse (18) parallel zur Auflagefläche (12) der Querfördereinrichtung (8) und quer zu deren Transportrichtung (10) relativ zur Auflagefläche (12) verschiebbar ist.

3. Vorrichtung (1) nach Anspruch 2, **dadurch gekennzeichnet, dass** der mindestens einen Linearführung (24) eine Zahnstange (27) zugeordnet ist, die sich entlang der Linearführung (24) erstreckt und mit einem Zahnrad kämmt, das mit einem dritten Positionierantrieb (26) in Antriebsverbindung steht.

4. Vorrichtung (1) nach Anspruch 3, **dadurch gekennzeichnet, dass** an beiden Axialenden der Rückwurfklappe (17) jeweils eine Linearführung (24) vorgesehen ist, an der eine Zahnstange (27) angeordnet ist, die mit einem ihr zugeordneten Zahnrad kämmt, und dass die Zahnräder durch eine parallel zur Schwenkachse (18) angeordnete Welle (28) miteinander verbunden sind.

5. Vorrichtung (1) nach einem der Ansprüche 2 bis 4, **dadurch gekennzeichnet, dass** die Schwenkachse (18) an einem ortsfest zu der Zahnstange (27) angeordneten Lagerteil (25) verschwenkbar gelagert ist.

6. Vorrichtung (1) nach einem der Ansprüche 1 bis 5, **dadurch gekennzeichnet, dass** die horizontale Tiefe, welche die oberste zweite Stufe (15) in einer normal zur Transportrichtung (10) der Querfördereinrichtung (8) angeordneten Ebene aufweist, mittels einer Tiefeneinstelleinrichtung (29), einstellbar ist, und dass die Tiefeneinstelleinrichtung (29) zum Verstellen der Tiefe einen vierten Positionierantrieb aufweist.

7. Vorrichtung (1) nach Anspruch 6, **dadurch gekennzeichnet, dass** die oberste erste Stufe (14) mittels der Tiefeneinstelleinrichtung (29) quer zur Fördereinrichtung (10) der Querfördereinrichtung (8) in horizontale Richtung auf die oberste zweite Stufe (15) zu- und von dieser wegbewegbar ist.

8. Vorrichtung (1) nach einem der Ansprüche 1 bis 7, **dadurch gekennzeichnet, dass** die ersten und/oder zweiten Stufen (14, 15) eine schräge Oberfläche zur Aufnahme der Gegenstände (2) aufweisen, die in einer normal zur Längserstreckung der Stufen (14, 15) angeordneten Ebene zu der Querfördereinrichtung (8) hin abfällt.

9. Vorrichtung (1) nach einem der Ansprüche 1 bis 8, **dadurch gekennzeichnet, dass** die Schwenkachse (18) oberhalb der Auflagefläche (12) der Querfördereinrichtung (8) oder oberhalb der geraderen Verlängerung dieser Auflagefläche (12) angeordnet ist.

10. Vorrichtung (1) nach einem der Ansprüche 1 bis 9, **dadurch gekennzeichnet, dass** die Rückwurfklappe (17) einen ersten und einen zweiten Flügel aufweist, die diametral zur Schwenkachse (18) angeordnet sind.
